# NEUE EUROPÄISCHE PATENTSCHRIFT

(11) **EP 2 192 026 B2**
(45) Veröffentlichungstag und Bekanntmachung des Hinweises auf die Entscheidung über den Einspruch: **23.08.2017**
(45) Hinweis auf die Patenterteilung: 05.11.2014
(21) Anmeldenummer: 09169025.5
(22) Anmeldetag: 31.08.2009
(51) Int. Cl.: B62D 63/02

(54) **Landwirtschaftliche Zugmaschine**
Agricultural traction engine
Machine de traction agricole

(30) Priorität: 28.11.2008 DE 102008059467
(43) Veröffentlichungstag der Anmeldung: 02.06.2010
(73) Patentinhaber: CLAAS Selbstfahrende Erntemaschinen GmbH, 33428 Harsewinkel (DE)
(72) Erfinder: Mümken, Philipp, 48151, Münster (DE)

(56) Entgegenhaltungen:
- WO-A-01/23244
- WO-A-03/084772
- DE-A1- 1 655 671
- DE-A1- 10 053 999
- DE-B- 1 015 700
- JP-A- 2000 142 451
- US-A1- 2005 035 650

## Beschreibung

Die vorliegend Erfindung betrifft eine landwirtschaftliche Zugmaschine und zwar schwerptuiktmäßig, aber nicht ausschließlich eine Zugmaschine mit wenigstens einem Raupenfahrwerk.

Landwirtschaftliche Zugmaschinen mit einem Raupenfahrwerk sind in vielen Formen bekannt, zum Beispiel aus EP 0 000 211 B1. Ein Raupenfahrwerk ermöglicht im Vergleich zu einem Fahrwerk mit Einzelrädern die Verteilung des Gewichts der Zugmaschine auf eine große Bodenfläche, so dass eine schwere zugmaschine auch auf gegen hohe Belastung empfindlichen Böden eingesetzt werden kann. Da die Fertigung eines Raupenfahrwerks deutlich aufwendiger als die eines Fahrwerks mit Einzelrädern ist, sind Zugmaschinen mit Raupenfahrwerk zwangsläufig teurer als Maschinen mit einem konventionellen Fahrwerk. Sie stellen daher nur einen kleinen Anteil der insgesamt im Einsatz befindlichen landwirtschaftlichen Zugmaschinen. Infolge dessen werden sie nur in kleinen Serien gefertigt, was die Kosten dieser Maschinen abermals erhöht. Das Dokument JP2000-142451 wird als nächstliegend Stand der Technik gegenüber dem Gegenstand des Anspruchs 1 angesehen.

Aufgabe der Erfindung ist daher, ein Konzept für landwirtschaftliche Zugmaschinen zu schaffen, das eine weitgehend vereinheitlichte Fertigung von. Maschinen mit Raupenfahrwerk und mit konventionellen Fahrwerk ermöglicht, so dass die gemeinsamen Teile beider Maschinentypen einheitlich und demzufolge in einer vergrößerten Serie mit entsprechenden Kostenvorteilen gefertigt werden können.

Die Aufgabe wird gelöst durch ein landwirtschaftliches Zugmaschinensystem, bei dem eine Motor-Kabine-Einheit und ein vorderer Fahrwerksteil zu einer vorderen Baugruppe zusammengefasst sind und die vordere Baugruppe wahlweise mit einem ersten hinteren Fahrwerksteil oder einem von dem ersten hinteren Fahrwerksteil baulich verschiedenen zweiten hinteren Fahrwerksteil modular zusammenfügbar ist, um eine fahrbare Zugmaschine zu bilden. Die vordere Baugruppe kann somit für eine Vielzahl von Zugmaschinentypen identisch und in großer Stückzahl rationell gefertigt werden; die mit einer kleineren Serie zusammenhängenden Kostennachteile treten allenfalls bei den hinteren Fahrwerksteilen auf, nicht mehr aber bei der gesamten Maschine.

Die konstruktiven Unterschiede zwischen den wenigstens zwei verschiedenen hinteren Fahrwerksteilen können insbesondere darin liegen, dass der erste hintere Fahrwerksteil wenigstens ein Räderpaar umfasst und der zweite hintere Fahrwerksteil zwei Raupenschiffe umfasst.

Einer ersten Ausgestaltung zufolge können die Räder bzw. die Raupenschiffe im Wesentlichen die gesamten hinteren Fahrwerksteile bilden und an einer gleichen Achse der Zugmaschine montierbar sein.

Die Raupenschiffe weisen vorzugsweise jeweils eine zentrale angetriebene Rolle zwischen antriebslosen vorderen und hinteren Umlenkrollen auf. Ein solches Raupenschiff ist durch Abmontieren des Raupenbandes sowie ggf. Entfernen der Umlenkrollen und Ausbauschen der angetriebenen Rolle leicht von Raupenauf Radbetrieb umrüstbar.

Zum Lenken einer Zugmaschine des erfindungsgemäßen Systems gibt es diverse Möglichkeiten, von denen vorzugsweise eine oder zwei gleichzeitig in einer gleichen Zugmaschine verwirklicht sind:
- der vordere Fahrwerksteil ist lenkbar;
- die Räder des ersten hinteren Fahrwerksteils und/oder die Raupenschiffe des zweiten hinteren Fahrwerksteils sind gegen ihren Träger einschlagbar;
- der Träger des ersten und/oder des zweiten hinteren Fahrwerksteils ist in Bezug zur Motor-Kabine-Einheit einschlagbar;
- der Träger des ersten und/oder des zweiten hinteren Fahrwerksteils ist in Bezug zur Motor-Kabine-Einheit einschlagbar.

Da bei einer landwirtschaftlichen Zugmaschine der vordere Fahrwerksteil meist ein geringeres Gewicht zu tragen hat als der hintere, genügt im Allgemeinen, wenn der vordere Fahrwerksteil einachsig ist. Die vordere Baugruppe ist somit für sich allein nicht standfest und auch nicht fahrbar. Erst durch ihre Kombination mit dem hinteren Fahrwerksteil wird eine fahrbare Maschine erhalten.

Mehr als eine Achse kann vorzugsweise am hinteren Fahrwerksteil vorgesehen werden, da dieses meist stärker belastet ist als das vordere Fahrwerksteil.

Ein Adapter für ein zu ziehendes Gerät ist vorzugsweise an den hinteren Fahrwerksteilen vorgesehen. Als Adapter kommen insbesondere eine Anhängerkupplung, ein Kraftheber und ein Sattel in Betracht.

Wenn der hintere Fahrwerksteil ein Brückenteil und einen darunter angebrachten drehbaren Träger umfasst, dann ist der Adapter vorzugsweise am Brückenteil vorgesehen.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht einer erfindungsgemäßen landwirtschaftlichen Zugmaschine mit einem ersten Typ von hinterem Fahrwerksteil;
- Fig. 2: eine Seitenansicht der Zugmaschine mit einem zweiten Typ von hinterem Fahrwerksteil;
- Fig. 3: eine Seitenansicht der Zugmaschine mit einem dritten Typ von hinterem Fahrwerksteil;
- Fig. 4: ein erstes Beispiel für eine Lenkung der Zugmaschine;
- Fig. 5: ein zweites Beispiel für eine Lenkung der Zugmaschine;
- Fig. 6: ein drittes Beispiel für eine Lenkung der Zugmaschine;
- Fig. 7: eine Seitenansicht der Zugmaschine mit einem vierten Typ von hinterem Fahrwerksteil;
- Fig. 8: eine Seitenansicht der Zugmaschine aus Fig. 7 mit von Raupen- auf Räderfahrt umgestelltem hinterem Fahrwerksteil;
- Fig. 9: eine Seitenansicht einer Variante der zugmaschine aus Fig. 7 während der Umstellung von Raupen- auf Räderfahrt; und
- Fig. 10: die Zugmaschine aus Fig. 9, umgesetllt auf Räderfahrt.

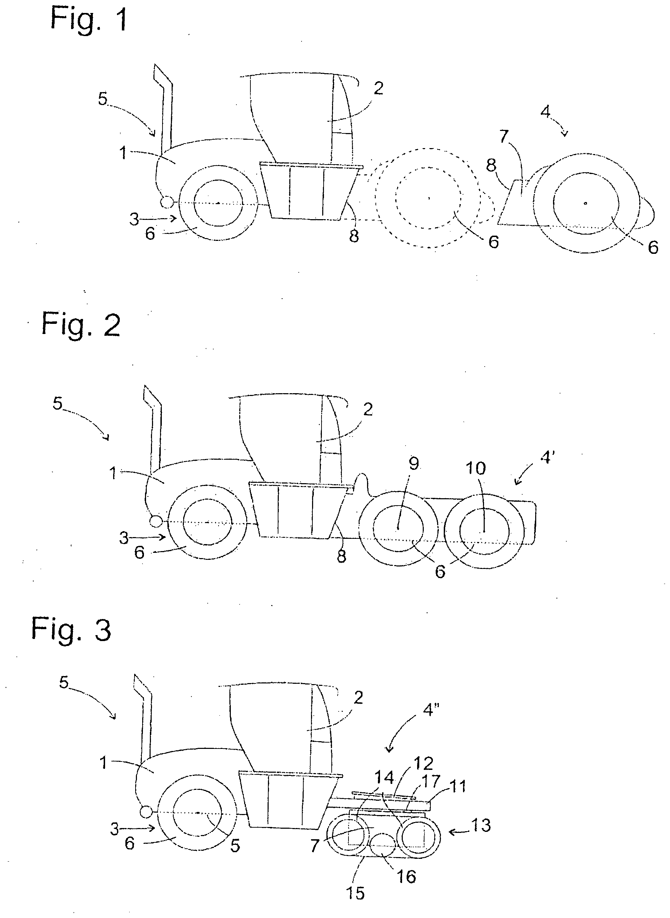

Fig. 1 zeigt eine stark schematisierte Seitenansicht einer landwirtschaftlichen Zugmaschine gemäß einer ersten Ausgestaltung der Erfindung. Die Zugmaschine ist in zwei Module, ein Frontmodul 5 und ein Heckmodul 4, gegliedert. Das Frontmodul 5 umfasst ein Motorgehäuse 1, eine Fahrerkabine 2 und einen vorderen Fahrwerksteil 3. Das vordere Fahrwerksteil 3 umfasst eine Achse mit achsschenkelgelenkten, luftbereiften Rädern 6.

Das Heckmodul 4 umfasst einen Trägerblock 7 mit einer Hinterachse, die mit ebenfalls luftbereiften Rädern 6 bestückt ist. Die Hinterachse kann eine Starrachse sein, oder sie kann wie die Vorderachse lenkbar sein, um die Manövrierfähigkeit der Zugmaschine zu verbessern, insbesondere um ihren Wendekreis zu verkleinern und Fahren im Hundegang zu ermöglichen.

An einer Schnittstelle 8 zwischen den Modulen ist unter anderem eine Antriebswelle vom Motor im Frontmodul 5 zu den Rädern 6 des Heckmoduls 4 durchgeführt.

Das Heckmodul 4 ist einmal in durchgezogenen Linien separat vom Frontmodul 5 und einmal gestrichelt und verbunden mit dem Frontmodul 5 dargestellt, um anzudeuten, dass die beiden Module 4, 5 getrennt vormontiert und erst in einer späten Phase der Montage der Zugmaschine zusammengefügt werden. Dies ermöglicht die Verwendung des Frontmoduls 5 in Verbindung mit Heckmodulen von anderer Bauart als der in Fig. 1 gezeigten.

Ein Beispiel für die Kombination des Frontmoduls 5 mit einem anderen Heckmodul ist in Fig. 2 gezeigt. Das Heckmodul 4' hat hier zwei Achsen 9, 10 mit Luftbereifung, um eine hohe Last, z.B. eines auf dem Heckmodul 4' abgestützten Anhängers oder eines frei hängend getragenen Bodenbearbeitungswerkzeugs, auf eine größere Bodenfläche zu verteilen, als dies mit der Einzelachse des Heckmoduls 4 möglich ist.

Die Achsen 9, 10 können beide Starrachsen sein. Um die Kurvengängigkeit der zugmaschine zu verbessern, ist vorzugsweise wenigstens die hintere Achse 10 lenkbar. Für ein Fahren im Hundegang ist die Lenkbarkeit beider Achsen 9, 10 erforderlich. Es kann jede Achse 9, 10 einzeln achsschenkelgelenkt sein, oder ein gemeinsamer Trägerblock beider Achsen 9, 10 kann einen Drehschemel bilden, der gegen ein fest mit dem Frontmodul 5 verbundenes Brückenteil des Heckmoduls 4' um eine vertikale Achse drehbar ist.

Fig. 3 zeigt eine Zugmaschine mit demselben Frontmodul 5 wie oben beschrieben und einem abermals abgewandelten Heckmc-dul 4". Dieses Heckmodul 4" setzt sich im Wesentlichen zusammen aus einem in Längsrichtung der zugmaschine ausgedehnten, im wesentlichen horizontal orientierten Brückenteil 11, das starr am Frontmodul 5 befestigt ist und einen Sattel 12 für einen Sattelaufleger trägt, und einem Raupenfahrwerk mit einem unter dem Brückenteil 11 angeordneten und mit diesem über einen Drehkranz 17 verbundenen Trägerblock 7 und beiderseits des Trägerblocks 7 angeordneten Raupenschiffen 13. Jedes Raupenschiff 13 umfasst eine vordere und eine hintere Umlenkrolle 14, ein die Umlenkrollen 14 umschlingendes Raupenband 15 und eine Stützrolle 16, die in einem Zwischenraum zwischen den zwei Umlenkrollen 14 in Kontakt mit einem auf dem Boden aufliegenden Strang des Raupenbandes 15 angeordnet ist, um das auf dem Heckmodul 4" ruhende Gewicht möglichst gleichmäßig über die gesamte Länge des am Boden anliegenden Strangs zu verteilen. Je nach Abstand der Umlenkrollen 14 kann die Stützrolle 16 auch entfallen, oder es kann mehr als eine Stützrolle 16 pro Raupenschiff 13 vorgesehen sein.

Während bei dem vorderen Fahrwerksteil 3 und den Heckmodulen 4 und 4' die Ausdehnung der Bodenkontaktfläche wesentlich durch den Durchmesser und die Zahl der Räder 6 bestimmt ist, ist bei einem Raupenfahrwerk wie dem des Heckmoduls 4" hierfür im wesentlichen der Abstand zwischen den Umlenkrollen 14 ausschlaggebend. Der Durchmesser der Umlenkrollen 14 kann daher, wie in Fig. 3 gezeigt, kleiner sein als der Durchmesser der Räder 6, und er kann insbesondere kleiner sein als die Bodenfreiheit des Brückenteils 11. So können bei einem Lenkeinschlag des Raupenfahrwerks dessen Umlenkrollen 14 ungehindert unter das Brückenteil 11 einrücken, und der Einschlagwinkel ist nicht - wie etwa bei der Ausgestaltung der Fig. 2 - durch die Möglichkeit des Anstoßens der Räder an das Brückenteil 11 begrenzt.

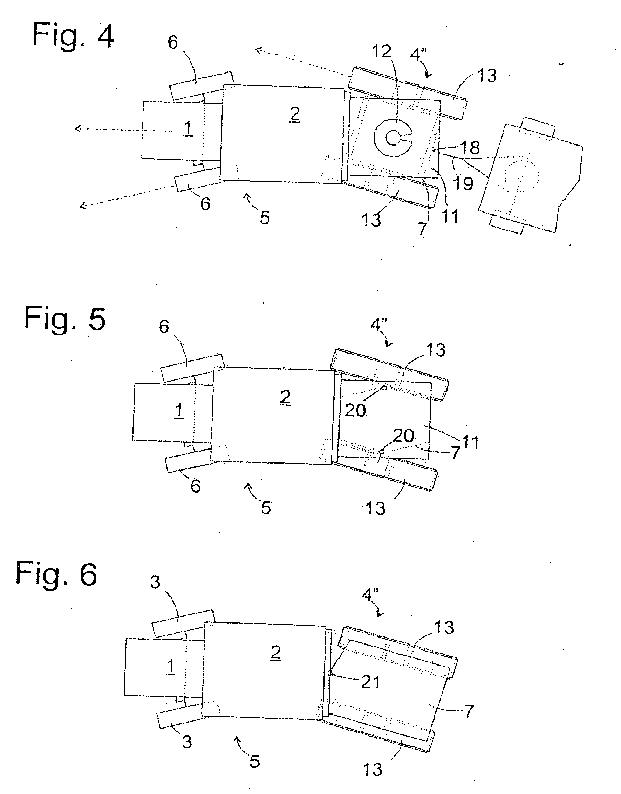

Fig. 4 zeigt eine Draufsicht auf die zugmaschine der Fig. 3, die die Arbeitsweise ihrer Lenkung veranschaulichen soll. Man erkennt die achsschenkelgelenkten Räder 6 am Frontmodul 5. Sie sind hier bezogen auf die Längsrichtung der Zugmaschine nach links eingeschlagen; die Längsrichtung und die Rollrichtung der Räder 6 sind jeweils durch strichpunktierte Pfeile dargestellt. Der Träger 7 ist in entgegengesetzter Richtung eingeschlagen, so dass das Raupenfahrwerk die Kurvenfahrt unterstützt. In einem alternativen Betriebsmodus ist der Träger jeweils gleichläufig mit den Rädern 6 des Frontmoduls 5 eingeschlagen; in diesem als Hundegang bezeichneten Betriebsmodus sind die Fahrspuren der Räder 6 und der Raupenschiffe 13 jeweils parallel gegeneinander verschoben, um die Last der Maschine möglichst gleichmäßig auf den Boden zu verteilen.

Die Drehachse des Drehkranzes 17 fällt mit dem Mittelpunkt des Sattels 12 überein, so dass von einem auf dem Sattel aufliegenden Anhänger ausgeübte bremsende Kräfte ohne Einfluss auf die Drehung des Trägers 7 sind. Eine Kupplung 18 für eine Anhängerdeichsel 19 oder ein nachgezogenes Bodenbearbeitungswerkzeug ist am Träger 7 angeordnet, da das hintere Ende des Brückenteils 11 in der Kurvenfahrt ausschwenkt und eine daran angekoppelte Anhängerdeichsel Gefahr laufen könnte, zu verkanten.

Fig. 5 zeigt einen alternativen Aufbau der Lenkung der Zugmaschine. Die Raupenschiffe 13 sind hier jeweils einzeln um voneinander beabstandete Achsen 20 in Bezug zum Träger 7 schwenkbar, der Träger 7 selbst ist unbeweglich. Der Hub der Raupenschiffe 13 in Längsrichtung der Zugmaschine ist bei diesem Aufbau kleiner als bei dem Drehschemelaufbau der Fig. 4, so dass große Einschlagwinkel leichter zu realisieren sind.

Bei der Ausgestaltung der Fig. 6 sind Front- und Heckmodul 5, 4" in einem Gelenk 21 mit vertikaler Achse verbunden, und die Maschine ist einerseits durch Einschlagen der vorderen Räder 6, andererseits durch eine Schwenkbewegung der beiden Module 4", 5 gegeneinander in dem Gelenk 21 lenkbar.

Natürlich kann in den Maschinen der Fig. 4 bis 6 das als Beispiel gezeigte Heckmodul 4" mit Raupenfahrwerk auch durch Heckmodule mit Rädern wie 4 und 4' oder eines der im folgenden noch beschriebenen Heckmodule 4"', 4"" ersetzt werden.

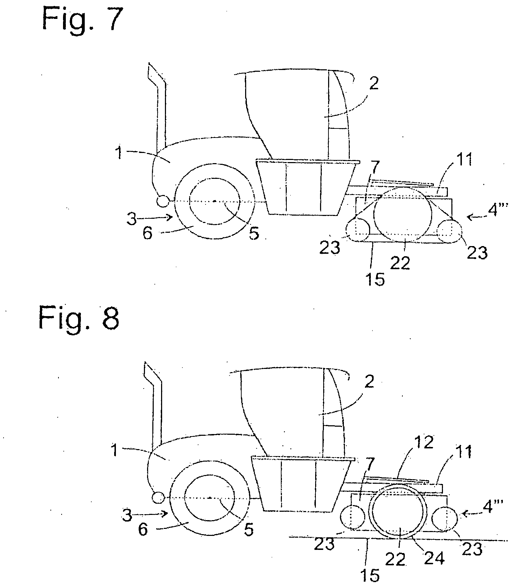

Fig. 7 zeigt die Zugmaschine gemäß einer vierten Ausgestaltung der Erfindung. Hier ist das Heckmodul 4"' der Maschine als sogenannte Stocks-Raupe ausgebildet, das heißt jedes Raupenschiff 13 hat eine zentrale Antriebsrolle 22 und in Fahrtrichtung davor und dahinter jeweils eine antriebslose Umlenkrolle 23, deren Durchmesser deutlich kleiner als der der Antriebsrolle 22 ist. Der Durchmesser der Antriebsrolle 22 ist größer als die Bodenfreiheit des Brückenteils 11, doch da beim Schwenken die Umlenkrollen unter das Brückenteil 11 einrücken können, ist die Schwenkbewegungsfreiheit des Heckmoduls 4'" nicht notwendigerweise kleiner als die eines Moduls mit Rädern in der Größe der Antriebsrollen 22.

Ein weiterer Vorteil der Stocks-Raupe ist neben der relativ großen Schwenkbewegungsfreiheit die Konvertierbarkeit. Fig. 8 zeigt eine Ansicht der Zugmaschine aus Fig. 7, bei der das Raupenband 15 geöffnet ist und flach am Boden liegt. Die Umlenkrollen 22 sind am Trägerblock 7 in eine angehobene Stellung ohne Bodenberührung versetzt. Wenn die Zugmaschine in dieser Konfiguration anfährt, fungieren die Antriebsrollen 23 als Räder.

Um das Fahrverhalten bei Räderfahrt zu verbessern, können die Antriebsrollen 22 mit einer elastischen Ummantelung 24 versehen sein.

Die Umrüstung des Heckmoduls 4"' von Raupen- auf Räderfahrbetrieb und zurück kann nach Bedarf vom Benutzer vorgenommen werden.

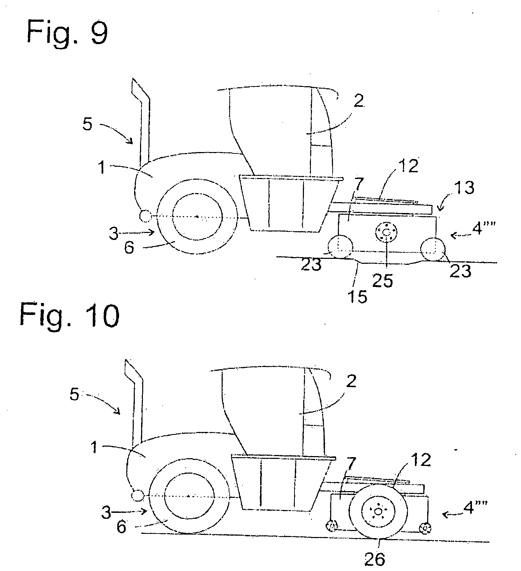

Eine weitere Ausgestaltung eines umrüstbaren Heckmoduls 4"" ist in Fig. 9 und 10 gezeigt. Im Raupenfahrbetrieb unterscheidet sich das Heckmodul 4"" äußerlich nicht vom Modul 4"' der Fig. 7. Fig. 9 zeigt ein Zwischenstadium der Umrüstung von Raupenauf Räderfahrbetrieb. An beiden Raupenschiffen 13 ist das Raupenband 15 geöffnet, die Antriebsrolle 22 ist abmontiert, und ein Trägerflahsch der Antriebsachse 25 ist sichtbar. Das Modul 4""' steht auf seinen Umlenkrollen 23. Das Bodenniveau an den Umlenkrollen 23 ist etwas höher als unter der Antriebsachse 25. Daher kann am Flansch der Antriebsachse 25 ein - ggf. luftbereiftes - Rad 26 montiert werden, dessen Durchmesser etwas größer als der der abmontierten Antriebsrolle 22 ist. Wenn die Maschine sich bewegt, bekommen die Räder 26 Bodenkontakt, und die Umlenkrollen 23 sind entlastet und können leicht abmontiert werden. Es wird die in Fig. 10 gezeigte Konfiguration erhalten, in der Räderfahrbetrieb möglich ist.

## Patentansprüche

1. Landwirtschaftliches Zugmaschinensystem mit einer Motor-Kabine-Einheit (1, 2), einem vorderen (3) und einem ersten hinteren Fahrwerksteil (4), **dadurch gekennzeichnet, dass** eine vordere Baugruppe (5), die die Motor-Kabine-Einheit (1, 2) und den vorderen Fahrwerksteil (3) umfasst, wahlweise mit dem ersten hinteren Fahrwerksteil (4) oder wenigstens einem von dem ersten hinteren Fahrwerksteil (4) baulich verschiedenen zweiten hinteren Fahrwerksteil (4', 4", 4"', 4"") modular zusammengefügt ist, um eine fahrbare Zugmaschine zu bilden, wobei der erste hintere Fahrwerksteil (4, 4') wenigstens ein Räderpaar (6) und einen Träger (7), an dem die Räder (6) drehbar gehalten sind, und der zweite hintere Fahrwerksteil (4", 4"', 4"") zwei Raupenschiffe (13) und einen Träger (7), an dem beide Raupenschiffe (13) gehalten sind, umfasst, wobei der Träger (7) des zweiten hinteren Fahrwerksteils (4, 4', 4", 4"', 4"") in Bezug zur Motor-Kabine-Einheit (1, 2) einschlagbar ist, und der hintere Fahrwerksteil ein fest mit der vorderen Baugruppe verbundenes Brückenteil (11) umfasst und der Träger (7) unter dem Brückenteil (11) angeordnet und gegen das Brückenteil (11) um eine vertikale Achse schwenkbar ist.

2. Landwirtschaftliches Zugmaschinensystem nach Anspruch 1, **dadurch gekennzeichnet, dass** der erste hintere Fahrwerksteil (4"") wenigstens ein Räderpaar (26) umfasst und der zweite hintere Fahrwerksteil (4", 4"' ,4"") zwei Raupenschiffe (13) umfasst, die an einer gleichen Achse (25) wie das wenigstens eine Räderpaar (26) montierbar sind.

3. Landwirtschaftliche Zugmaschine nach Anspruch 1, **dadurch gekennzeichnet, dass** die Raupenschiffe (13) jeweils eine zentrale angetriebene Rolle (22) zwischen antriebslosen vorderen und hinteren Umlenkrollen (23) aufweisen.

4. Landwirtschaftliches Zugmaschinensystem nach Anspruch 1 oder 3, **dadurch gekennzeichnet, dass** an wenigstens einem der Träger (7) Räder (26) und Raupenschiffe (13) gegeneinander austauschbar sind.

5. Landwirtschaftliches Zugmaschinensystem nach Anspruch 1, 3 oder 4, **dadurch gekennzeichnet, dass** die Räder (6) des ersten hinteren Fahrwerksteils (4, 4') und/oder die Raupenschiffe (13) des zweiten hinteren Fahrwerksteils (4", 4"', 4"") gegen ihren Träger (7) einschlagbar sind.

6. Landwirtschaftliches Zugmaschinensystem nach einem der Ansprüche 3 bis 6, **dadurch gekennzeichnet, dass** der Träger (7) des ersten hinteren Fahrwerksteils (4, 4', 4", 4"', 4"") in Bezug zur Motor-Kabine-Einheit (1, 2) einschlagbar ist.

7. Landwirtschaftliches Zugmaschinensystem nach Anspruch 1, **dadurch gekennzeichnet, dass** der hintere Fahrwerksteil mit der vorderen Baugruppe (5) um eine vertikale Achse (21) schwenkbar verbunden sind.

8. Landwirtschaftliches Zugmaschinensystem nach einem der vorhergehenden Ansprüche, **dadurch gekennzeichnet, dass** der vordere Fahrwerksteil (3) lenkbar ist.

9. Landwirtschaftliches Zugmaschinensystem nach einem der vorhergehenden Ansprüche, **dadurch gekennzeichnet, dass** der vordere Fahrwerksteil (3) einachsig ist.

10. Landwirtschaftliches Zugmaschinensystem nach einem der vorhergehenden Ansprüche, **dadurch gekennzeichnet, dass** die hinteren Fahrwerksteile (4, 4', 4", 4"', 4"") jeweils wenigstens einen Adapter (12, 18) für ein zu ziehendes Gerät aufweisen.

11. Landwirtschaftliche Zugmaschine nach Anspruch 10, **dadurch gekennzeichnet, dass** der wenigstens eine Adapter (12, 18) ausgewählt ist unter einer Anhängerkupplung, Kraftheber und einem Sattel:

12. Landwirtschaftliche Zugmaschine nach Anspruch 10 oder 11, soweit auf Anspruch 9 rückbezogen, **dadurch gekennzeichnet, dass** der Adapter (12) am Brückenteil (11) angebracht ist.

## Claims

1. Agricultural tractor system, comprising an engine-cab unit (1, 2), a front (3) and a first rear chassis part (4), **characterised in that** a front assembly (5), which comprises the engine-cab unit (1, 2) and the front chassis part (3), is joined in modular manner optionally to the first rear chassis part (4), or at least one second rear chassis part (4', 4", 4"', 4"") which is structurally different from the first rear chassis part (4) to form a drivable tractor machine, wherein the first rear chassis part (4, 4') comprises at least one wheel pair (6) and a carrier (7) on which the wheels (6) are mounted rotatably, and the second rear chassis part (4", 4"', 4"") comprises two caterpillar track units (13) and a carrier (7) on which the two caterpillar track units (13) are mounted, wherein the carrier (7) for the second rear chassis part (4, 4', 4", 4"', 4"") is steerable in a different direction relative to the engine-cab unit (1, 2), and the rear chassis part comprises a bridge part (11) that is connected in fixed manner with the front assembly and the carrier (7) is arranged below the bridge part (11) and pivotable about a vertical axis towards the bridge part (11).

2. Agricultural tractor system according to claim 1, **characterised in that** the first rear chassis part (4"") comprises at least one wheel pair (26), and the second rear chassis part (4", 4"', 4"") comprises two caterpillar track units (13) which can be mounted on the same axle (25) as the at least one wheel pair (26).

3. Agricultural tractor system according to claim 1, **characterised in that** each of the caterpillar track units (13) has a central driven roller (22) located between non-driven front and rear deflection rollers (23).

4. Agricultural tractor system according to claim 1 or 3, **characterised in that** the wheels (26) and the caterpillar track units (13) on at least one of the carriers (7) are interchangeable with each other.

5. Agricultural tractor system according to claim 1, 3 or 4, **characterised in that** the wheels (6) of the first rear chassis part (4', 4), and/or the caterpillar track units (13) of the second rear chassis part (4", 4"', 4"") are steerable towards their carrier (7).

6. Agricultural tractor system according to claims 3 to 6, **characterised in that** the carrier (7) of the first rear chassis part (4, 4', 4", 4"', 4"") is steerable in a different direction relative to the engine-cab unit (1, 2).

7. Agricultural tractor system according to claim 1, **characterised in that** the rear chassis part is connected to the front assembly (5) in such manner as to be pivotable about a vertical axis (21).

8. Agricultural tractor system according to one of the preceding claims, **characterised in that** the front chassis part (3) is steerable.

9. Agricultural tractor system according to one of the preceding claims, **characterised in that** the front chassis part (3) has a single axle.

10. Agricultural tractor system according to one of the preceding claims, **characterised in that** each of the rear chassis parts (4, 4', 4", 4"', 4"") includes at least one adapter (12, 18) for a device to be pulled.

11. Agricultural tractor system according to claim 10, **characterised in that** the at least one adapter (12, 18) is selected from the group consisting of a trailer hitch, a hydraulic lift, and a saddle.

12. Agricultural tractor system according to claim 10 or 11 if referring back to claim 9, **characterised in that** the adapter (12) is installed on the bridge part (11).

## Revendications

1. Système de tracteur agricole comportant une unité moteur-cabine (1, 2), un élément de train de roulement avant (3) et arrière (4), **caractérisé en ce qu'**un module avant (5), qui comprend l'unité moteur-cabine (1, 2) et l'élément de train de roulement avant (3), est assemblé aux choix de manière modulaire avec le premier élément de train de roulement arrière (4) ou au moins un second élément de train de roulement arrière (4', 4'', 4''', 4"") différent structurellement du premier élément de train de roulement arrière (4) afin de constituer un tracteur déplaçable, le premier élément de train de roulement arrière (4, 4') comprenant au moins une paire de roues (6) et un support (7), sur lequel les roues (6) sont maintenues de manière à pouvoir tourner et que le second élément de train de roulement arrière (4", 4"', 4"") présente deux coques de chenilles (13) et un support (7) sur lequel les deux coques de chenilles (13) sont maintenues, le support (7) du second élément de train de roulement arrière (4, 4', 4", 4''', 4"") étant encastrable par rapport à l'unité moteur-cabine (1, 2) et l'élément de train de roulement arrière comprenant un élément de pontage raccordé au module avant (11) et le support (7) étant disposé sous l'élément de pontage (11) et pivotable par rapport à l'élément de pontage (11) autour d'un axe vertical.

2. Système de tracteur agricole selon la revendication 1, **caractérisé en ce que** le premier élément de train de roulement arrière (4"" ) comprend au moins une paire de roues (26) et le second élément de train de roulement arrière (4", 4"' 4"") deux coques de chenilles (13) qui peuvent être montées sur un même essieu (25) que l'au moins une paire de roues (26).

3. Système de tracteur agricole selon la revendication 1, **caractérisé en ce que** les coques de chenilles (13 présentent respectivement un rouleau central entraîné (22) entre des rouleaux d'inversion avant et arrière non entraînés (23).

4. Système de tracteur agricole selon la revendication 1 ou 3, **caractérisé en ce que**, au niveau d'au moins un des supports (7), les roues (26) et les coques de chenilles (13) sont mutuellement interchangeables.

5. Système de tracteur agricole selon la revendication 1, 3 ou 4, **caractérisé en ce que** les roues (6) du premier élément de train de roulement arrière (4, 4') et/ou les coques de chenilles (13) du second élément de train de roulement arrière (4", 4"', 4"") sont encastrables contre leur support (7).

6. Système de tracteur agricole selon une des revendications 3 à 6, **caractérisé en ce que** le support (7) du premier élément de train de roulement arrière (4, 4', 4", 4"', 4"") est encastrable par rapport à l'unité moteur-cabine (1, 2).

7. Système de tracteur agricole selon la revendication 1, **caractérisé en ce que** l'élément de train de roulement arrière est raccordé au module avant (5) de manière pivotable autour d'un axe vertical (21).

8. Système de tracteur agricole selon une des revendications précédentes, **caractérisé en ce que** l'élément de train de roulement avant (3) est dirigeable.

9. Système de tracteur agricole selon une des revendications précédentes, **caractérisé en ce que** l'élément de train de roulement avant (3) comporte un seul essieu.

10. Système de tracteur agricole selon une des revendications précédentes, **caractérisé en ce que** les éléments de train de roulement arrière (4, 4', 4", 4"', 4"") présentent respectivement au moins un adaptateur (12, 18) pour un appareil à tirer.

11. Système de tracteur agricole selon la revendication 10, **caractérisé en ce que** l'au moins un adaptateur (12, 18) est sélectionné parmi un attelage de remorque, un système de relevage et un véhicule attelé.

12. Système de tracteur agricole selon la revendication 10 ou 11, dans la mesure où il se réfère à la revendication 9, **caractérisé en ce que** l'adaptateur (12) est installé sur l'élément de pontage (11).
